# EUROPEAN PATENT APPLICATION

(11) **EP 4 571 513 A1**
(43) Date of publication of application: **18.06.2025**
(21) Application number: 24209724.4
(22) Date of filing: 30.10.2024
(51) Int. Cl.: G06F 9/50

(54) **METHOD AND DEVICE FOR OPTIMIZING AN AUDIO PRODUCT**

(30) Priority: 13.12.2023 IN 202341084983
(71) Applicant: Harman Becker Automotive Systems GmbH, 76307 Karlsbad (DE)
(72) Inventor: SCHMIDTKE, Valentin, 75334 Straubenhardt (DE); HEGDE, Ravish Sreepada, 560111 Bangalore (IN); BALASUBRAMANIAN, Saravanan, 620012 Crawford (IN)
(74) Representative: Kraus & Lederer PartGmbB

(57) **Abstract**

The present application relates to a computer-implemented method (300) for optimizing an audio product (100). The audio product (100) comprises a plurality of audio objects implemented on a processing device (102) comprising a plurality of memories (112-118, 410-414) each having a specific latency level. Each of the plurality of audio objects requires storage capacity for at least one data block. The method comprises generating (302) a plurality of memory allocations (400-404). Each of the plurality of memory allocations (400-404) assigns each data block of each audio object to one of the plurality of memories (112-118, 410-414). The method further comprises determining for at least some of the plurality of memory allocations (400-404) a respective workload associated with the respective memory allocation including: configuring (304) the plurality of audio objects according to the respective memory allocation, executing (306) the audio product comprising the plurality of configured audio objects on the processing device (102), and determining (308) the respective workload of the processing device (102) during execution of the audio product. One of the plurality of memory allocations (400-404) is selected (312) as an optimized memory allocation based on the plurality of respective workloads.

## Description

### Technical Field

The present application relates to a method and a device for optimizing an audio product, in particular for optimizing the processing of the audio product on the processor.

### Background

Companies and developers looking to create and customize audio systems and algorithms may utilize a software framework as a flexible and scalable platform for designing and implementing audio processing solutions in various applications, e.g. automotive audio systems. The software platform may offer a set of tools and libraries to help design, simulate, and optimize audio processing pipelines, making it easier to integrate advanced audio features into products. The software framework may include an audio algorithm toolbox which is a collection of software tools and algorithms that help engineers and developers to enhance the audio quality and functionality of their products. It may include a wide range of signal processing algorithms, audio effects, and audio enhancement techniques. These tools can be used to develop applications for noise reduction, audio equalization, sound enhancement, and more. The toolbox may be designed to be versatile, allowing developers to choose and customize the algorithms that best suit their specific audio processing needs. Furthermore, the software framework may include a tuning tool which is a software application for fine-tuning and optimizing audio systems. It may provide a user-friendly interface for adjusting and optimizing the acoustic performance of audio products, such as automotive infotainment systems or home audio setups. The tool may allow audio engineers to customize sound characteristics, equalization settings, and other parameters to achieve the desired audio quality and listening experience. The audio product thus designed may be processed on a processing device comprising one or more processors and associated memory. However, processing performance of the processing device may be limited, particularly in small and mid-size automotive environments.

### Summary

In view of the above, there is a need to optimize the processing of audio products on processing devices of different types, architectures and/or compute capability.

According to the present application, this need is met by the features defined in the independent claims. The dependent claims define embodiments.

A computer-implemented method for optimizing an audio product is provided. The audio product comprises a plurality of audio objects implemented on a processing device. The processing device may comprise one or more processors, e.g. a digital signal processor and/or a general purpose processor. The processing device comprises a plurality of memories, each having a specific latency level. Each of the plurality of audio objects requires memory capacity for at least one data block. The at least one data block may be used to store, for example, an audio signal or parts of the audio signal to be processed, configurations of the audio object, coefficients for processing the audio signal, for example filter coefficients, or parts of software implementing at least some functions of the audio object. For example, a data block may have a size in a range from a few bytes, e.g. 50 bytes, to a few megabytes, e.g. 5 to 10 MB. Each of the plurality of memories may comprise, for example, an external memory coupled to the processor or an internal cache memory of the processor. There may be different types of external memory coupled to the processor having different access times. An external memory may have a size of a few megabytes up to a few gigabytes. The processing device, in particular the processor(s) of the processing device, may include different internal cache memories with different access times, for example, level 1 (L1) cache, level 2 (L2) cache, and so on. Internal cache memory can range in size from a few kilobytes to a few megabytes. For example, a certain number of different memory types with different latency levels, i.e. different access times, may be defined, e.g. 16 different latency levels may be defined.

The method comprises generating a plurality of memory allocations. Each of the plurality of memory allocations assigns each data block of each audio object to one of the plurality of memories. However, when generating the plurality of memory allocations, each of the plurality of memory allocations may be generated by considering a specific size of each of the data blocks and a size of each of the plurality of memories. For example, some of the data blocks may be assigned to the same memory as long as the cumulated size of the data blocks does not exceed the size of the memory. The plurality of memory allocations may comprise at least different memory allocations that assign a particular data block of a particular audio object to different memories with different latency levels. For example, the plurality of memory allocations may comprise in different memory allocations that a particular data block of a particular audio object is assigned to memories of all available latency levels and having a size larger than the size of the particular data block. In some examples the plurality of memory allocations may comprise all possible combinations of assignments of data blocks of the audio objects to memories having different latency levels, taking into account a size of each of the plurality of memories and a specific size of each of the data blocks.

The method further comprises determining for at least some of the plurality of memory allocations a respective workload associated with the respective memory allocation. For determining the respective workload of a respective memory allocation, the plurality of audio objects are configured according to the respective memory allocation, and the audio product comprising the plurality of configured audio objects is executed on the processing device including the plurality of memories. The respective workload of the processing device is determined during execution of the audio product. The respective workload of the processing device may vary significantly depending on the configured memory allocation. The respective workload may be defined as a relationship between the performance required for executing the audio product on the processing device with respect to a maximum performance of the processing device. In some examples, the workload may be measured in million instructions per second (MIPS). A specific audio data block of an audio object may be assigned in a first memory allocation to a level 1 cache of the processing device and in a second memory allocation to an external memory. In the configuration of the first memory allocation, the processor of the processing device may require less instructions for executing a task of the audio object than in the configuration of the second memory allocation as the process and has to include or perform several wait cycles or no-operation cycles due to the higher latency of the external memory. As a result, for the same task of the audio object, the required MIPS may significantly vary and the overall throughput of the processing device may be improved by reducing the MIPS for each audio object. Therefore, according to the method, one of the plurality of memory allocations is selected as an optimized memory allocation based on the plurality of respective workloads.

As the respective workloads are measured on a real system, e.g. a system like the target system, the resulting workloads will be reliably achieved in real world applications and therefore a high confidence can be achieved. The plurality of memory allocations can be generated automatically and can be applied automatically to the real system such that a developer of the audio product is not concerned with this task. In particular, by generating and applying the memory allocations computer-based, generating and testing all possible combinations like a brute force like approach becomes feasible.

In some examples, the respective workloads may be determined consecutively for at least some of the plurality of memory allocations. In other embodiments the respective workloads may be determined in parallel on processing devices operated in parallel.

In some examples, the respective workloads may be determined consecutively for at least some of the plurality of memory allocations until at least one of the respective workloads meets a predefined workload threshold. For example, the method may be terminated when a memory allocation is found where the workload is less than for example 80% of the maximum workload the processing device can achieve.

According to various examples, executing the audio product on the processing device comprises applying a predefined signal to be processed by the processing device. The predefined signal may comprise a mixture of typically expected audio signals to be processed by the audio product, including for example different kinds of music, speech and ambient noise as can be expected in the environment of use, for example noise from a driving motor and wind noise in a vehicle.

Each audio object may comprise instructions for processing an audio signal when being executed on the processing device. The instructions may be configured to implement functions like mixers, filters, limiters, speech management, e.g. speech recognition and filtering, and noise management, e.g. noise reduction or noise cancellation. A plurality of different audio object types may be defined, for example about 50 to 100 different types, and an audio product may include several tens or hundreds of instances of audio objects. A specific audio object type may be instantiated only once or a plurality of times in an audio product.

According to some further aspects, a device for optimizing an audio product is provided. The audio product comprises a plurality of audio objects implemented on a processing device. Each of the plurality of audio objects requires storage capacity for at least one data block. The processing device comprises a plurality of memories for storing the data blocks. Each of the plurality of memories has a specific latency level. The latency level may relate to an access time for writing data to and reading data from a specific type of memory. In some memory types, the latency level may be characterised by a time required for accessing a set of memory cells. For example, some memory types may require a setup time for accessing a set of for example 1024 cells and after that setup time, the 1024 cells can be read out or written at high speed without requiring the setup time for each cell. In some memory types, each cell may be accessible for read and write with a certain fixed access time. In some memory types, writing to a cell may require a certain fixed write access time and reading from a cell may require a certain fixed read access time which is different, for example lower than the write access time. Some memory types may be arranged outside the processor and some other memory types may be arranged as cache memory inside the processor. Different levels of cache memory may be provided. The memory size of each memory type may be different, for example external memory may be larger than cache memory, a lower level cache may be smaller than a higher level cache. For example, a level 1 (L1) cache may have a few kilobytes only, a level 3 (L3) cache may have a few megabytes, and a level 2 (L2) cache may have a size between L1 cache and L2 cache.

The device for optimizing the audio product comprises an interface for communicating with the processing device, and a processing unit. The processing unit is configured to generate a plurality of memory allocations. Each of the plurality of memory allocations assigns each data block of each audio object to one of the plurality of memories, i.e. each of the plurality of memory allocations comprises for each data block of each audio object an assignment to a memory such that each data block can be stored. Several data blocks may be assigned to one specific memory provided that the one specific memory has a sufficient capacity to store the several data blocks. The processing unit is further configured to determine for at least some of the plurality of memory allocations a respective workload associated with the respective memory allocation. For accomplishing this, the processing unit includes for a respective memory allocation of the plurality of memory allocations: downloading a configuration for the plurality of audio objects according to the respective memory allocation via the interface to the processing device; instructing the processing device to execute the audio product comprising the plurality of configured audio objects; and receiving the respective workload of the processing device during execution of the audio product from the processing device. Based on the plurality of respective workloads, the processing unit selects one of the plurality of memory allocations as an optimized memory allocation.

The device may be configured to perform the method of any of the examples above.

The features set out above and those described below may be used not only in the corresponding combinations explicitly set out, but also in other combinations or in isolation, without departing from the scope of protection of the present invention.

### Brief description of the Drawings

The present invention will now be described more fully hereinafter with reference to the accompanying drawings, in which embodiments of the invention are shown. However, this invention should not be construed being limited to the embodiments set forth herein. Rather, these embodiments are provided so that this disclosure will be thorough and complete, and will fully convey the scope of the invention to those skilled in the art. Like numbers refer to like elements throughout.
FIG. 1 schematically shows an audio product according to one of a number of embodiments;
FIG. 2 schematically shows an audio product in connection with a device for optimizing the audio product according to one of a number of embodiments;
FIG. 3 shows a flowchart of a method for optimizing an audio product according to one of a number of embodiments;
FIG. 4 shows memory allocations according to one of a number of embodiments.

### Detailed description

The properties, features and advantages of this invention described above and the way in which they are achieved will become clearer and more clearly understood in association with the following description of the exemplary embodiments which are explained in greater detail in connection with the drawings. For simplicity and illustrative purposes, the present invention is described by referring mainly to an exemplary embodiment thereof. In the following description, numerous specific details are set forth in order to provide a thorough understanding of the present invention. However, it will be readily apparent to one of ordinary skill in the art that the present invention may be practiced without limitation to these specific details. In this description, well known methods and structures have not been described in detail so as not to unnecessarily obscure the present invention.

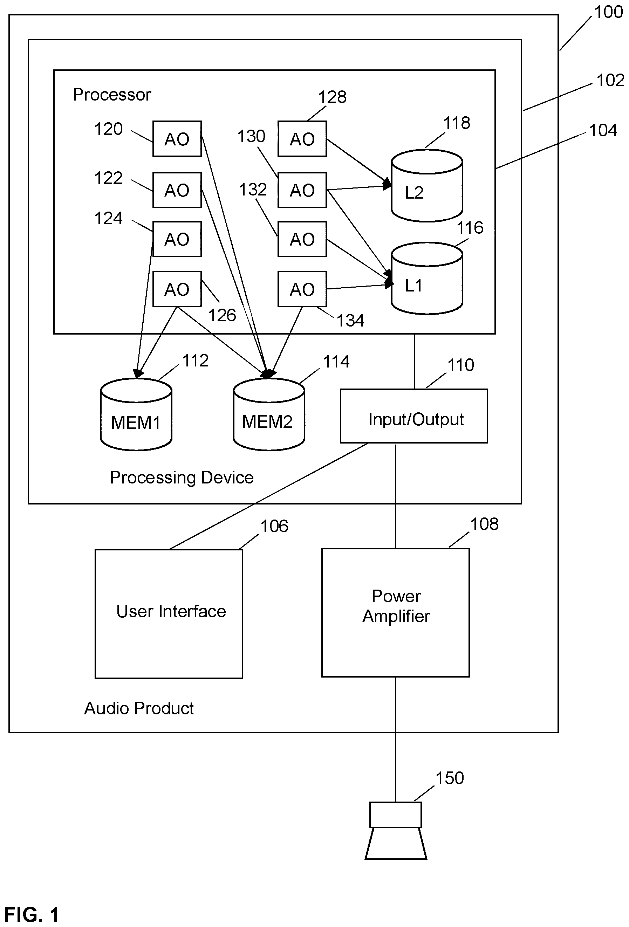

FIG. 1 illustrates an audio product 100. The audio product 100 may be configured for use in an automotive environment, such as a car radio or a car entertainment system. In other examples, the audio product 100 may be configured to be used in a home environment as a hi-fi system or in a public environment, such as a theatre or concert hall, as a public access or surveillance system. The audio product 100 may include a processing device 102, a user interface 106, and one or more power amplifiers 108. The audio product 100 may be coupled to one or more loudspeakers 150. In other examples, the loudspeaker 150 may be included in the audio product 100, for example in a portable hi-fi system. The audio product 100 may include other components, for example interfaces for receiving audio data to be output by the audio product 100, for example a wireless or wired internet connection for receiving audio streaming data, or a radio receiver for receiving radio broadcast services.

The processing device 102 may be a digital processing device including a processor 104 memory 112, 114 and one or more input/output units 110. The memory 112, 114 may comprise random access memory (RAM), read only memory (ROM), flash memory, a hard disk, etc. for storing software to be executed by the processor 104 and data. The memory 112, 114 is outside the processor 104 and is therefore frequently named external memory. The data may include audio data, and configuration data such as filter coefficients. Different kinds of memory 112, 114 may be provided having different latencies or access times and sizes. For example, memory 112 may be a static RAM (SRAM) having an access time of a few nanoseconds and a size of a few hundred megabytes. Memory 114 may be a dynamic RAM (DRAM) having an access time slower than the SRAM, for example by a factor 1.5 or 2 or 4 slower than the SRAM, and a size of some gigabytes. Usually, faster RAM is more expensive than the slower RAM not only in cost, but also in view of size and power consumption. Although only two different types of memory are shown in FIG. 1, the processing device 102 may include more than these two types, for example four types or more.

The processor 104 may include one or more general purpose processors and/or digital signal processors (DSP) or any other type of processor configured to process audio functions on audio data. The processor 104 may include internal memory 116, 118 also known as the cache memory. The processor 104 may include several cache memories of different levels, for example L1 cache 116 and L2 cache 118. Although only two levels of cache are shown in FIG. 1, the processor 104 may include more than these two levels, for example four levels or even more. The L1 cache 116 may have a shorter access time than the L2 cache 118, i.e. L1 cache 116 is faster than L2 cache 118. The size of the L1 cache 116 may be smaller than the size of the L2 cache 118. For example, the size of the L1 cache 116 may be a few kilobytes, for example 16 to 128 kB, and the size of the L2 cache 118 may be up to a few megabytes, for example 1 to 4 MB.

The processor 104 may be configured to execute software including instructions for processing audio data. The software may include audio objects which are software components configured to perform certain audio processing functions when being executed. A plurality of audio objects may be included in the software executed on the processor 104. The audio objects may implement functions like filtering, the speech processing, noise management, encoding and decoding of audio data, etc. Processing pipelines may be implemented by the plurality of audio objects. The processor 104 may implement any number of audio objects, for example a few 10 audio objects up to 100 audio objects or beyond.

In the example shown in FIG. 1 the processor 104 implements eight audio objects 120-134. Each audio object may need some memory space for storing data, for example a filter audio object may need memory space for storing filter coefficients, input audio data to be filtered and filtered output audio data. For example, each audio object may require memory space for one or more data blocks. Each data block may have a specific size as defined by the audio object. The filter audio object may require memory space for three data blocks, e.g. a large data block for the input audio data, a small data block for the filter coefficients, and a large data block for the output audio data. Each audio object may be configurable to store each data block in a specific area of the memory accessible by the processor 104. Each specific area may be specified by its start address and size or by its start address and end address. As indicated in FIG. 1, audio object 120 may require a single data block only and audio object 120 may be configured to store this data block in memory 114. Similarly, audio object 122 may require a single data block only and audio object 122 may be configured to store this data block in memory 114. Audio object 124 may require a single data block also and audio object 124 may be configured to store this data block in memory 112. Audio object 126 may require storage memory for two data blocks and audio object 126 may be configured to store one of these data blocks in memory 112 and the other of these data blocks in memory 114. Audio object 128 may require storage capacity for a single data block and may be configured to use cache memory 118. Audio object 130 may require storage capacity for two data blocks and may be configured to use cache memory 118 for one of these data blocks and cache memory 116 for the other. Audio object 132 may require storage capacity for one data block and may be configured to use cache memory 116. Finally, audio object 134 may require storage capacity for two data blocks and may be configured to use cache memory 116 and external memory 114.

As discussed above, the processor 104 such as a DSP, may have different data storage systems. For example, internal cache memory and external memory. Each type of memory may have a different access time. Depending on where the data used by the audio object is placed, the processor 104 can retrieve or store the data faster or slower and may perform operations faster or slower. However, the fastest memory may not be available for all audio objects. For example, in automotive environments fast or cache memory may be sparse, in particular in economy class vehicles with entry-level audio systems. Thus, it may be important to place the data blocks in the optimal memory to get the best performance for the processing pipeline.

For example, a developer or engineer of the audio product 100 may consider the following to get the best performance. It may be calculated how much memory the processing pipeline needs. Further, The developer may need to identify and understand the most frequently used data blocks. This may require insights in the audio objects and expertise. The frequently used data blocks may be allocated in the fastest available memory, e.g. in the cache(s) 116, 118 on the processor 104. Due to the limited availability of fastest memory, e.g. cache memory 116 in the processor 104, the process of identifying and assigning the critical data blocks may be difficult and time consuming. The code of the processing pipeline and/or audio objects may need to be compiled once the memory placement is complete and the binaries may be downloaded to a target hardware or platform for the audio product and tested. The entire process may be repeated until optimum performance is achieved. Such process may be costly, in particular when a same or similar processing pipeline is to be implemented on different processing devices having different memory architectures and processing power.

A development kit may provide an easy way to configure memory latency by exposing the various possible memory types available on the processor to the developer. When creating the processing pipeline, a new memory allocation on the processor can be realized on e.g. a graphical user interface by the developer assigning a memory type of the various available memory types to each data block of each audio object. A diagram on the graphical user interface may show the memory latency configuration. The audio objects may be a reconfigurable regarding their memory allocation without the need to change the code and download the binaries. Instead, merely a configuration regarding the memory usage may be downloaded on the target platform for each of the audio objects. Development speed may be increased and thus cost may be reduced.

A monitoring tool provided on the platform may measure the speed of execution of the processing pipeline. For example, the monitoring tool may measure a workload of the processor 104. The workload may be determined in terms of instructions per second or million instructions per second (MIPS). When the processor is often waiting for data to be read from or stored to a slow memory, the processor may perform waiting instructions such that the amount of MIPS required for performing a certain task raises. On the other hand, with an improved memory allocation, the number of waiting instructions performed by the processor may be reduced when performing the processing pipeline such that the amount of MIPS is lowered and a whole workload of the processor is lowered. This may reduce power consumption and enable to implement the processing pipeline on less expensive processing devices.

The developer can change the memory allocation on the graphical user interface and measure the MIPS for each configuration. A corresponding diagram showing workload measurements, for example MIPS, is received from the platform. However, this may still be a time-consuming procedure.

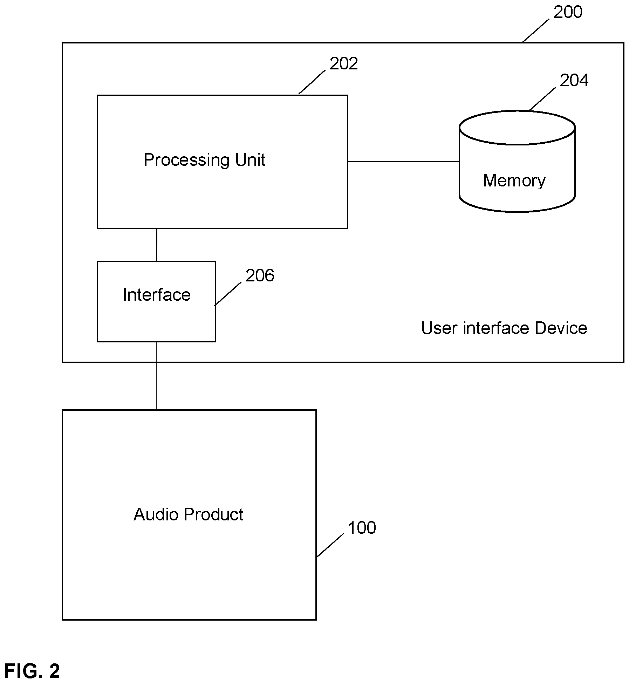

FIG. 2 shows a device 200 for automatically optimizing the audio product 100. The device or user interface device 200 comprises a processing unit 202, a memory 204 and an interface 206. The user interface device 200 may include further components, for example a user interface including a display, keyboard and mouse, a power supply unit etc. The device 200 may comprise a personal computer, a laptop computer a notebook computer, a tablet computer, a server, a workstation or any other kind of computer. The interface 206 may be configured to communicate with the audio product 100. In particular, the interface 206 may be configured to download software and data such as configuration data to the audio product 100 and to upload data from the audio product 100, for example the above discussed workload measurements. The interface 206 may be configured to instruct the audio product 100 to execute software downloaded to the audio product 100. The interface 206 may be configured to provide data to be processed by the audio product 100, for example audio streaming data to be processed and output by the audio product 100. The processing unit 202 may be a general purpose processing unit, for example a central processing unit (CPU). The memory 204 may comprise different types of memory, for example a main memory including read only memory (ROM) and random-access memory (RAM) and mass storage memory, for example a hard disc (HD) or a solid-state disc (SSD). The interface 206 may include any kind of data interface, for example a local area network (LAN), a universal serial bus (USB), a car area network (CAN), a wireless interface such as Bluetooth or WLAN, or a proprietary database specifically designed for the communication with the audio product 100.

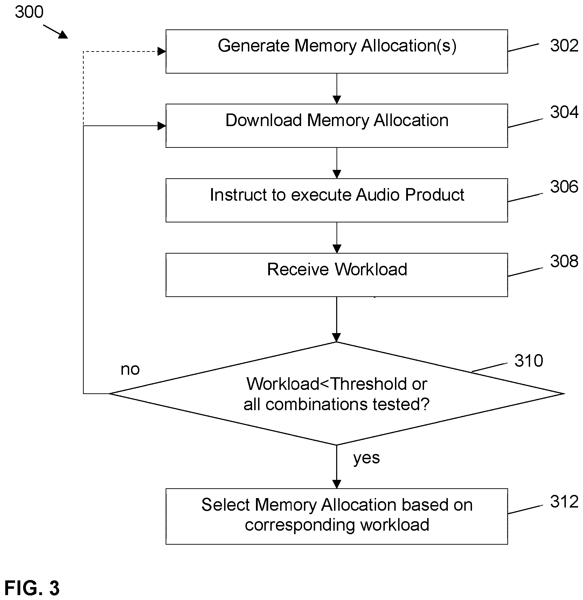

The processing unit 202 may be configured to execute software that performs a method for optimizing the audio product 100. An exemplary method for optimizing the audio product 100 is illustrated in FIG. 3. The method 300 comprises method steps 302 to 312 which may be performed by the processing unit 202. The method steps 302 to 312 may be executed in the order shown in FIG. 3 and described below. However, the method steps 302 to 312 may be executed in any other appropriate order or in parallel.

In step 302 a plurality of memory allocations is generated. Each memory allocation includes assignments between each data block of each audio object to a certain memory type.

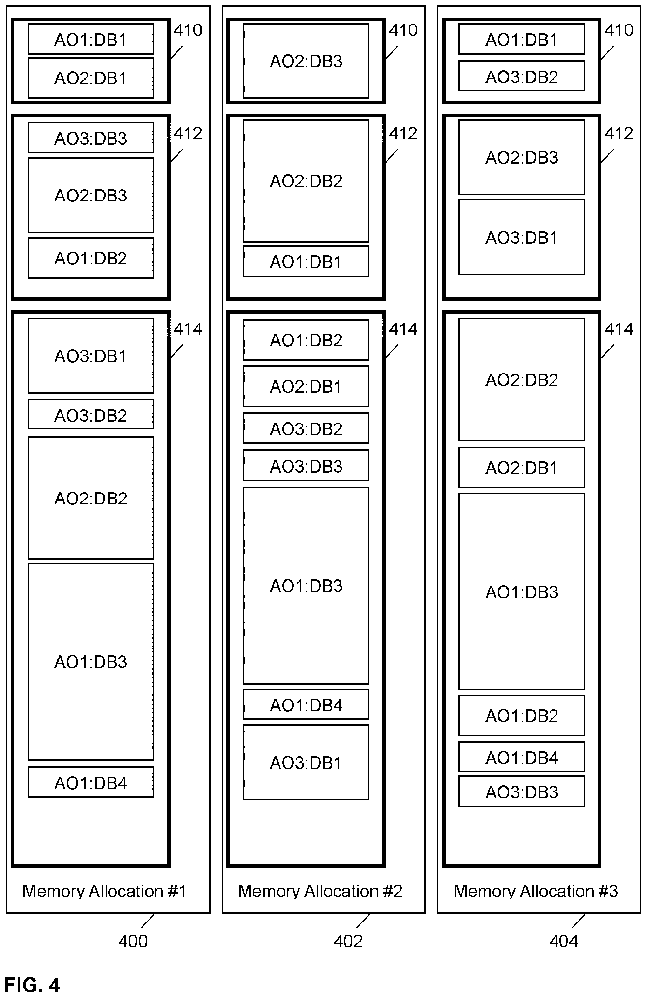

FIG. 4 shows three different memory allocations 400, 402 and 404 for an audio product 100. In the examples of FIG. 4 it is assumed that the processing device 102 includes three different memories 410, 412 and 414. Each memory may have a specific access time and size. Memory 410 may be the smallest memory with the shortest access time. Memory 410 may be an internal cache memory corresponding to memory 116 in FIG. 1. Memory 412 may be larger than memory 410 and may have a medium access time. Memory 412 may be an internal cache memory corresponding for example to memory 118 in FIG. 1, or a fast external memory corresponding for example to memory 112 of FIG. 1. Memory 414 may be even larger than memory 412, but may have the longest access time, i.e. longer than the medium access time of memory and 412. Memory 414 may be an external memory corresponding to memory 112 or 114 in FIG. 1. Although the sizes of the areas of the memories 410, 412 and 414 in FIG. 4 shall indicate schematically their storage capacity sizes, FIG. 4 is only a schematic view and in a real system, the size of the external memory 414 may be larger than the size of each of the cache memories 410, 412 by a factor of 10 or 100 or even more, i.e. external memory 414 may have a size of some hundred megabytes or even some gigabytes.

In the example illustrated in FIG. 4, three audio objects AO1 to AO3 are implemented in the audio product 100 and require memory space for their data blocks. Audio object AO1 requires memory space for four data blocks AO1:DB 1, AO1:DB2, AO1:DB3 and AO1:DB4, audio object AO2 requires memory space for three data blocks AO2:DB1, AO2:DB2 and AO2:DB3, and audio object AO3 requires memory space for three data blocks AO3:DB1, AO3:DB2 and AO3:DB3. As illustrated by the areas of the data blocks, each data block requires certain amount of memory space, i.e. AO1:DB1 requires much less memory space than AO1DB3.

According to these examples, in memory allocation 400 data block DB1 of audio object AO1 and data block DB1 of audio object AO2 are assigned to memory 410. With these data blocks the capacity of memory 410 is essentially exhausted. Therefore, data blocks AO3:DB3, AO2:DB3 and AO1:DB2 are assigned to memory 412 such that memory 412 is essentially completely occupied. The remaining data blocks are assigned to memory 414.

In memory allocation 402, data block DB3 of audio object AO2 is assigned to a memory 410. This data block AO2:DB3 is so large that no other additional data block fits into the memory 410. Data blocks AO2:DB2 and AO1:DB1 may be assigned to memory 412 and require so much memory that no other additional data block fits into a memory 412. The remaining data blocks are assigned to memory 414.

In memory allocation 404 data block DB1 of audio object AO1 and data block DB2 of audio object AO3 are assigned to memory 410. With these data blocks the capacity of memory 410 is essentially exhausted. Data blocks AO2:DB3 and AO3:DB1 are assigned to memory 412 such that memory 412 is essentially completely occupied. The remaining data blocks are assigned to a memory 414.

Further memory allocations and may be generated. For example, for each possible combination of data block to memory type assignment a corresponding memory allocation may be generated. The faster memories 410 and 412 may be preferred when assigning the data blocks. Size restrictions may be considered when generating the memory locations. For example, in the example of FIG. 4, data blocks AO2:DB2 and AO1:DB3 cannot be assigned to memory 410. As will be described below, the memory allocations may be generated successively while applying the memory allocations to the audio product 100.

However, after generating at least one memory location in step 302, a first one of the at least one memory allocation is downloaded from the device 200 via interface 206 to the audio product 100 in step 304. In response to the download, the processor 104 configures the audio objects according to the downloaded memory allocation, for example according to allocation 400 of FIG. 4. In step 306, the device 200 instructs the processor 104 to start executing the audio product 100. Executing the audio product 100 may include processing of audio data, for example receiving audio data from a streaming service via the Internet, receiving broadcasted audio data (analog or digital), or reading audio data from a mass storage device like flash memory, CD, DVD or memory card. The processing may include for example decoding and filtering the audio data and preparing the audio data for output by the power amplifier 108. The audio data to be processed may be predefined test audio data provided by the device 200.

While executing the audio product 100 including processing the audio data, a monitoring tool may determine the workload of the processing device 202 caused by executing the audio product 100. The monitoring tool may be a software executed on the processor 104. In some examples, the workload may be determined in terms of a percentage of processing power of the maximum processing power provided by the processing device 202. In further example, the workload may be determined as million instructions per second (MIPS) required for executing the audio product 100. The determined workload may be requested by the device 200 from the audio product 100 and received in step 308. In some examples the determined workload may be autonomously transmitted from the audio product 100 to the device 200 upon determination, for example after processing the predefined test audio data.

In step 310, the device 200 may decide whether or not to apply and test another memory allocation. For example, the device 200 may continue to apply and test further memory allocations until all possible memory allocations have been tested. As described above, all memory allocations may be determined initially at step 302. In this case, the process may continue with the application of the next memory allocation in step 304. In some examples, the memory allocations may be determined sequentially, one or more subsequent memory allocations each after application of the previous memory allocation(s). In this case, the method may continue with the generation of the next memory allocation(s) in step 302 and the application of the next memory allocation in step 304. In various examples, the device 200 may compare in step 310 whether the determined workload is below a workload threshold. The workload threshold may be a predefined threshold indicating for example a certain percentage of the maximum workload achievable by the processing device 102. For example, the workload threshold may be 80% of the maximum workload of the processing device 102. The workload threshold may be configurable by the developer using the device 200. If the determined workload is not below the workload threshold, the method is continued in step 302 with generating a next memory allocation or directly in step 304 with applying the next memory allocation. For each applied to memory allocation, the corresponding determined workload may be stored in memory 204 in connection with the corresponding memory allocation.

When all memory allocations have been applied and tested or a workload below the workload threshold has been found, the method 300 is continued in step 312. In step 312 the best or most appropriate memory allocation may be selected. For example, if all possible combinations and thus all possible memory allocations have been applied and tested, the memory allocation with the best, i.e. the lowest, workload may be selected. If in step 310 a memory allocation with a workload below the threshold workload has been found, this memory location may be selected.

The selected memory allocation may be communicated to a developer of the audio product and may be used to implement the audio product 100 in a product comprising the type of processing device 102.

In summary, with the configuration and measurement method described above, the device 200 provides a tuning tool that can perform changes for the memory latency and measure MIPS. This method can be performed iteratively for all possible combinations to get best MIPS. The device 200 may perform all the above method steps and come up with the best memory allocation possible for a particular processing flow on the platform, i.e. the audio product 100. In some examples, the audio objects for which the allocation of the data blocks is performed may be configurable, for example by a user interface of the device 200. Furthermore, the memory types available on the target platform, i.e. the processing device 102, may be configurable. For example, a number of latency levels may be configured via a user interface of the device 200. Finally, the developer and may select a processing device 102 from a plurality of available processing devices configured to realize of the audio product 100.

By use of the above described methods and devices, an automated memory allocation may be provided such that development effort may be saved. An appropriate or even optimal memory allocation may be achieved by trying a large variety of combinations or even all possible combinations. Optimizing the memory allocation according to the above described methods and devices does not require a deep understanding of the functioning of the audio objects of the processing pipeline of the audio product 100. This may enable optimal integration of all kinds of audio objects, in particular third-party objects for which internal details are unknown. Mistakes which may occur the by manual allocation may be avoided and reliable performance data for the audio product can be provided.

## Claims

1. A computer-implemented method for optimizing an audio product, wherein the audio product (100) comprises a plurality of audio objects implemented on a processing device (102) comprising a plurality of memories (112-118, 410-414) each having a specific latency level, wherein each of the plurality of audio objects requires storage capacity for at least one data block, the method comprising:
- generating (302) a plurality of memory allocations (400-404), each of the plurality of memory allocations (400-404) assigning each data block of each audio object to one of the plurality of memories (112-118, 410-414),
- determining for at least some of the plurality of memory allocations (400-404) a respective workload associated with the respective memory allocation including:
- configuring (304) the plurality of audio objects according to the respective memory allocation,
- executing (306) the audio product comprising the plurality of configured audio objects on the processing device (102), and
- determining (308) the respective workload of the processing device (102) during execution of the audio product, and
- selecting (312) one of the plurality of memory allocations (400-404) as an optimized memory allocation based on the plurality of respective workloads.

2. The method of claim 1, wherein the respective workloads are determined consecutively for the least some of the plurality of memory allocations (400-404).

3. The method of claim 1 or claim 2, wherein the respective workloads are determined consecutively for the least some of the plurality of memory allocations (400-404) until at least one of the respective workloads meets a predefined workload threshold.

4. The method of any one of the preceding claims, wherein the respective workload is defined as a relationship between the performance required for executing the audio product on the processing device (102) with respect to a maximum performance of the processing device (102).

5. The method of any one of the preceding claims, wherein executing (306) the audio product on the processing device (102) comprises applying a predefined signal to be processed by the processing device (102) .

6. The method of any one of the preceding claims, wherein each of the plurality of memories (112-118, 410-414) comprises an external memory (112, 114) which is coupled to a processor (104) of the processing device (102) or an internal cache memory (116, 118) of the processor (104).

7. The method of any one of the preceding claims, wherein the processing device (102) comprises at least one of a digital signal processor and a general purpose processor.

8. The method of any one of the preceding claims, wherein each audio object comprises instructions for processing an audio signal when being executed on the processing device (102).

9. The method of any one of the preceding claims, wherein each of the plurality of memory allocations (400-404) is generated by considering a specific size of each of the data blocks and a size of each of the plurality of memories (112-118, 410-414).

10. The method of any one of the preceding claims, wherein the plurality of memory allocations (400-404) comprises at least different memory allocations that assign a particular data block of a particular audio object to different memories (112-118, 410-414) with different latency levels.

11. The method of any one of the preceding claims, wherein the plurality of memory allocations (400-404) comprises all possible combinations of assignments of data blocks of the audio objects to memories (112-118, 410-414) having different latency levels, taking into account a size of each of the plurality of memories (112-118, 410-414) and a specific size of each of the data blocks.

12. A device for optimizing an audio product, wherein the audio product (100) comprises a plurality of audio objects implemented on a processing device (102) comprising a plurality of memories (112-118, 410-414) each having a specific latency level, wherein each of the plurality of audio objects requires storage capacity for at least one data block, the device (200) comprising:
- an interface (206) for communicating with the processing device (102), and
- a processing unit (202) configured to
- generate (302) a plurality of memory allocations (400-404), each of the plurality of memory allocations (400-404) assigning each data block of each audio object to one of the plurality of memories (112-118, 410-414),
- determine for at least some of the plurality of memory allocations (400-404) a respective workload associated with the respective memory allocation including:
- downloading (304) a configuration for the plurality of audio objects according to the respective memory allocation via the interface (206) to the processing device (102),
- instructing (306) the processing device (102) to execute the audio product comprising the plurality of configured audio objects, and
- receiving (308) the respective workload of the processing device (102) during execution of the audio product from the processing device (102), and
- select (312) one of the plurality of memory allocations (400-404) as an optimized memory allocation based on the plurality of respective workloads.

13. The device of claim 12, wherein the device (200) is configured to perform the method of any of claims 1-11.
